# EUROPÄISCHE PATENTANMELDUNG

(11) **EP 1 039 247 A2**
(43) Veröffentlichungstag der Anmeldung: **27.09.2000**
(21) Anmeldenummer: 00105271.1
(22) Anmeldetag: 14.03.2000
(51) Int. Cl.: F24H 8/00, F24H 9/00, F24H 1/36

(54) **Heizgerät mit einem durch ein Brennstoff-Luftgemisch gespeisten Brenner**

(30) Priorität: 19.03.1999 DE 19912580
(71) Anmelder: ROBERT BOSCH GMBH, 70442 Stuttgart (DE)
(72) Erfinder: Besser, Ulrich, 73230 Kirchheim (DE)

(57) **Zusammenfassung**

Die Erfindung geht aus von einem Heizgerät mit einem durch ein Brennstoff-Luftgemisch gespeisten Brenner (10), einer Brennkammer (12) und einer Wärmetauschereinheit (14), in welchem das Verbrennungsgas mindestens im unteren Leistungsbereich des Heizgeräts unter den Taupunkt des Wasserdampfes abkühlt, ferner mit einem Bypasskanal (20) der zur Rückerwärmung des Abgases auf einen für Kamin-bzw. Außenwandanschluß zulässigen Wert durch Wärmezufuhr aus dem Verbrennungsgas die Brennkammer (12) mit einer Abgasabführung (18)verbindet. Es wird vorgeschlagen, daß stromauf von der Öffnung (22) des Bypasskanals (20) in der Abgasabführung (18) ein Stellelement (32, 32') angeordnet ist, das den Massenstrom der über den Bypasskanal (20) in die Abgasabführung (18) gelangenden Verbrennungsgase beeinflußt. Mit Hilfe eines einfach ausgebildeten Stellelement. (32, 32'), das im kalten Bereich der Abgasabführung (18) angeordnet ist, wird eine Anhebung der Abgastemperatur erreicht, so daß die Abgasabfübrung (18) insgesamt kondensatfrei bleibt.

## Beschreibung

### Stand der Technik

Die Erfindung geht aus von einem Heizgerät nach den Gattungsmerkmalen des Hauptanspruchs. Bei Heizgeräten, welche die Kondensationswärme des im Verbrennungsgas enthaltenen Wasserdampfes nutzen bzw. bei welchem das Abgas auf einen unter Taupunkttemperatur von ca. 55 °C liegenden Wert abgekühlt ist, muß das Abgas nach dem Verlassen des Wärmeübertragers wieder auf eine Temperatur hinter dem Gerät von mindestens 80 °C erwärmt werden, damit die Abgasabführung kondensatfrei bleibt. In der DE 296 18 380 wird ein gattungsgemäßes Heizgerät vorgeschlagen, bei dem mit Hilfe eines über einen die Brennkammer mit einem Abgasraum verbindenden Bypasskanals eine Rückerwärmung der Abgase erfolgt. Der wirksame Strömungsquerschnitt des Bypasskanals wird über am Bypasskanal angeordnete Stellelemente lastabhängig und/oder abhängig von der Temperatur des erhitzten Mediums gesteuert.

### Vorteile der Erfindung

Durch die erfindungsgemäße Maßnahme nach den Merkmalen des Hauptanspruchs erfolgt eine geregelte Anhebung der Abgastemperatur, ohne das die Stellglieder für die Regelung des Bypasstroms den hohen Verbrennungstemperaturen ausgesetzt sind. Mit Hilfe eines einfach ausgebildeten Stellelements, das im kalten Bereich der Abgasabführung angeordnet ist, kann das Mischungsverhältnis zwischen den heißen Verbrennungsgasen aus dem Bypasskanal und dem kalten Abgasstrom so eingestellt werden, daß die Abgastemperatur im gewünschten Sinne angehoben wird.

Durch die in den Unteransprüchen aufgeführten Merkmale sind vorteilhafte Ausgestaltungen der Anordnung nach dem Hauptanspruch möglich.

Eine einfache Ausführung zur Regelung der durch den Bypasskanal in die Abgasabführung gelangenden heißen Verbrennungsgase ergibt sich, wenn das in der Abgasabführung angeordnete Stellelement von außen manuell durch den Benutzer bedient werden kann.

Ein einfaches Justieren des Stellelements wird dadurch möglich, daß am Ende der Abgasabführung die Abgastemperatur gemessen wird, über ein Display vom Benutzer erfaßt und so eingestellt wird, daß auch im Teilllastbetrieb des Heizgeräts der heiße Bypassstrom die Abgastemperatur auf die geforderte Mindest- Abgastemperatur am Ende der Abgasabführung anhebt.

In einem zweiten Ausführungsbeispiel wird die Lage des Stellelements automatisch in Abhängigkeit von der von einem Wärmefühler erfaßten Abgastemperatur verändert. Der in der Abgasabführung hinter dem Bypasskanal angeordnete Wärmefühler ist über eine Steuerleitung mit einem Balg verbunden, der in Abhängigkeit von der Abgastemperatur die Position des Stellelements verändert.

In einer dritten Ausführungsform wird vorgeschlagen, das Stellelement in Abhängigkeit von der am Ende der Abgasabführung erfaßten Abgastemperatur motorisch zu steuern.

Das Stellelement ist in vorteilhafter Weise als Klappe ausgebildet.

### Zeichnung

Drei Ausführungsbeispiele der Erfindung sind in der Zeichnung schematisch dargestellt und in der nachfolgenden Beschreibung näher erläutert.

### Beschreibung der Ausführungsbeispiele

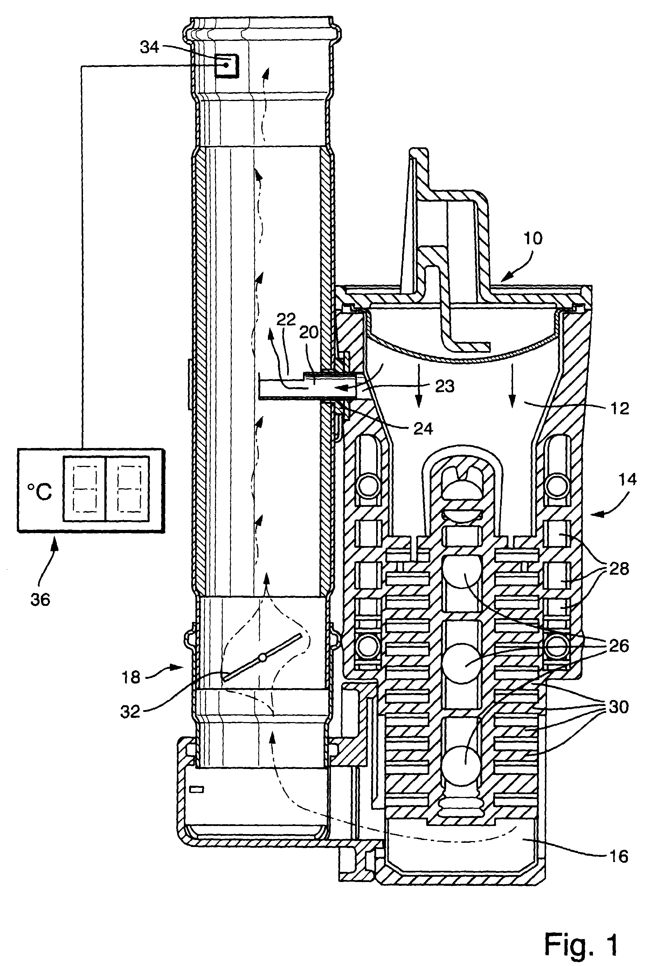

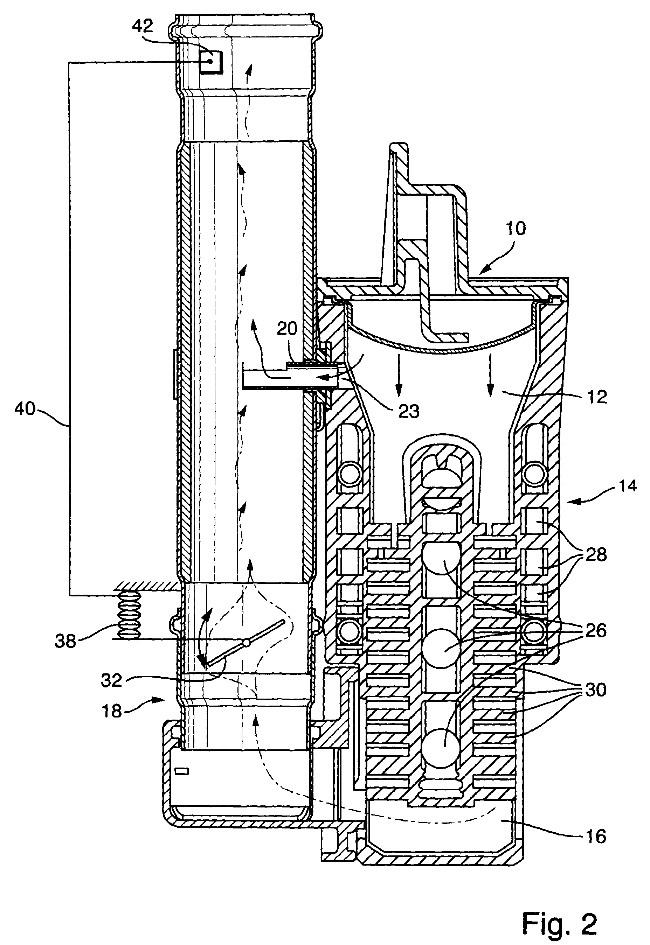

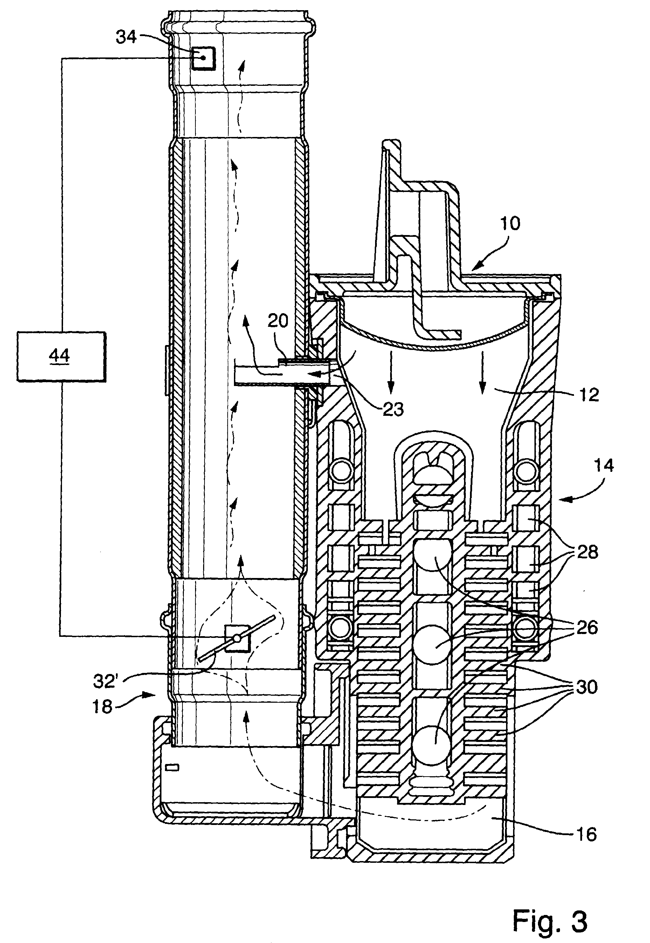

Das Heizgerät nach Figur 1 hat einen Brenner 10, dem ein Brenngas-Luftgemisch durch ein nicht dargestelltes Gebläse zugeführt wird. Der Brenner 10 sitzt am oberen Ende einer Brennkammer 12, die durch eine Wärmetauschereinheit 14 nach unten und seitlich abgeschlossen ist. Stromab der Wärmetauschereinheit 14 ist ein Abgasraum 16 angeordnet, an dessen tiefster Stelle eine nicht dargestellte Kondensatabführung vorgesehen ist. Der Abgasraum 16 ist stromab als Abgasabführung in Form eines Abgasrohres 18 ausgebildet, das nach oben zu einem nicht mehr dargestellten Kamin-bzw. Außenwandanschluß geführt ist.

Die Brennkammer 12 ist mit einem Bypasskanal 20 verbunden, der unter Umgehung der Wärmetauschereinheit 14 unmittelbar in das Abgasrohr 18 einmündet. Der Bypasskanal ist als gerader zylindrischer Stutzen 20 ausgebildet, dessen in das Abgasrohr 18 einmündendes Ende mit einer radialen Öffnung 22 versehen ist. Am anderen Ende ist der zylindrische Stutzen 20 in eine Öffnung 23 der Wärmetauschereinheit 14 eingesetzt und mittels eines Flansches 24 an dieser befestigt. Die Wärmetauschereinheit 14 weist wasserführende Kanäle 26,28 auf, so daß das darin strömende Wasser durch die heißen Verbrennungsgase die entlang von Rippen 30 in Richtung des Abgasraumes 16 strömen, erhitzt wird. Die durch die Wärmetauschereinheit 14 abgekühlten Abgase strömen über den Abgasraum 16 in das Abgasrohr 18, das die Abgase schlußendlich ins Freie führt. Im Abgasrohr 18 ist stromauf des Bypasskanals 20 eine Klappe 32 angeordnet, deren Funktionsweise nachfolgend noch näher erläutert wird. Am Ende des Abgasrohres 18 ist ein Temperaturfühler 34 angeordnet, der im Betrieb des Heizgeräts die Abgastemperatur erfaßt, die mit Hilfe eines Displays 36 vom Benutzer abgelesen werden kann.

Die Anhebung der Abgastemperatur am Ende des Abgasrohrs 18 auf eine Temperatur von mindestens 80 °C erfolgt mit Hilfe der Klappe 32 auf folgende Art und Weise:

In Abhängigkeit von der Stellung der Klappe 32 verändert sich der Strömungswiderstand für die in Richtung des Abgasraumes 16 strömenden Verbrennungsgase. Damit wird durch die Stellung der Klappe 32 das Mischungsverhältnis zwischen dem durch den Bypasskanal 20 gelangenden heißen Verbrennungsgasstrom und dem kalten Abgasstrom, der über die Wärmetauschereinheit 14 und dem Abgasraum 16 in das Abgasrohr 18 gelangt, verändert. Wird die Klappe 32 in Schließrichtung bewegt, erhöht sich der Strömungswiderstand stromauf der Klappe 32, so daß ein entsprechend größerer Anteil an heißen Verbrennungsgasen über den Bypasskanal 20 in das Abgasrohr 18 gelangt und die Abgastemperatur entsprechend anhebt. Wird im umgekehrten Fall die Klappe 32 geöffnet, so wird der Strömungswiderstand stromauf der Klappe 32 verringert, und ein entsprechend kleinerer Strom von heißen Verbrennungsgasen gelangt über den Bypasskanal 20 in das Abgasrohr 18. Bei der Installation des Heizgeräts am Einsatzort kann der Installateur die von außen bedienbare Klappe 32 unter Zuhilfenahme des Displays 36 für die Anzeige der Abgastemperatur so einstellen, daß insbesondere auch im Teilllastbetrieb des Heizgeräts die Abgastemperatur am Ende des Albgasrohres 18 auf die geforderte MindestAbgastemperatur angehoben wird.

Beim zweiten Ausführungsbeispiel eines Heizgeräts, bei dem gleiche Bauteile mit gleichen Bezugszeichen versehen sind, ist die Klappe 32 mit einem mit einer Flüssigkeit versehenden Balg 38 verbunden, der an seinem anderen Ende über eine Steuerleitung 40 mit einem am Ende des Abgasrohres 18 angeordneten Wärmefühler 42 in Verbindung steht. Mit steigender Abgastemperatur dehnt sich die Flüssigkeit im Wärmefühler 42 und damit auch in der Steuerleitung 40 und im Balg 38 aus, wodurch die Klappe 32 in Richtung 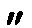 öffnen" bewegt wird. Das System ist so ausgelegt, daß die Stellung der Klappe 32 in Abhängigkeit von der momentan erfaßten Abgastemperatur nachgeführt wird, so daß gewährleistet ist, daß die resultierende Abgastemperatur am Ende des Abgasrohres 18 den vorgeschriebenen Minimalwert von 80 °C in allen Lastzuständen nicht nennenswert übersteigt. Damit wird gegenüber dem ersten Ausführungsbeispiel der Wirkungsgrad des Heizgerätes insgesamt verbessert.

Im dritten Ausführungsbeispiel wird die Klappe 32 motorisch gesteuert. Zu diesem Zweck ist der im Abgasrohr 18 angeordnete Temperatursensor 34 mit einem Steuergerät 44 verbunden, das wiederum entsprechend der Abgastemperatur die Stellung der Klappe 32' im gewünschten Sinne verändert.

## Patentansprüche

1. Heizgerät mit einem durch ein Brennstoff-Luftgemisch gespeisten Brenner, eine Brennkammer und einer Wärmetauschereinheit, in welchem das Verbrennungsgas mindestens im unteren Leistungsbereich des Heizgeräts unter den Taupunkt des Wasserdampfes abkühlt, ferner mit einem Bypasskanal, der zur Rückerwärmung des Abgases auf einen für Kamin-bzw. Außenwandanschluß zulässigen Wert durch Wärmezufuhr aus dem Verbrennungsgas die Brennkammer mit einer Abgasabführung verbindet, dadurch gekennzeichnet, daß stromauf von der Öffnung (22) des Bypasskanals (20) in der Abgasabführung (18) ein Stellelement (32, 32') angeordnet ist, das den Massenstrom der über den Bypasskanal (20) in die Abgasabführung (18) gelangenden Verbrennungsgase beeinflußt.

2. Heizgerät nach Anspruch 1, dadurch gekennzeichnet, daß das in der Abgasabführung (18) angeordnete Stellelement (32) von außen manuell verstellt werden kann.

3. Heizgerät nach Anspruch 2, dadurch gekennzeichnet, daß die Position des Stellelemts (32) abhängig ist von der in der Abgasabführung (18) hinter dem Bypaaskanal (20) gemessenen Abgastemperatur, die vom Benutzer über ein Display (36)erfaßt werden kann.

4. Heizgerät nach Anspruch 1, dadurch gekennzeichnet, daß in der Abgasabführung (18) hinter dem Bypasskanal (20) ein Wärmefühler (42)angeordnet ist, der über eine Steuerleitung (40)mit einem Balg (38)verbunden ist, der die Position des Stellelements (32) beeinflußt.

5. Heizgerät nach Anspruch 1, dadurch gekennzeichnet, daß das Stellelement (32') mit einem Motor versehen ist, der in Abhängigkeit von der Abgastemperatur die Position bzw. Lage des Stellelements (32')beeinflußt.

6. Heizgerät nach einem der vorhergehenden Ansprüche, dadurch gekennzeichnet, daß das Stellelement (32, 32') als Klappe ausgebildet ist.
